# EUROPÄISCHE PATENTSCHRIFT

(11) **EP 2 927 868 B1**
(45) Veröffentlichungstag und Bekanntmachung des Hinweises auf die Patenterteilung: **08.05.2019**
(21) Anmeldenummer: 15158158.4
(22) Anmeldetag: 09.03.2015
(51) Int. Cl.: G06T 7/00

(54) **VERFAHREN ZUR PRÜFUNG DER ZUVERLÄSSIGKEIT DER FEHLERERKENNUNG EINES BILDINSPEKTIONSVERFAHRENS**
METHOD FOR TESTING THE RELIABILITY OF FAULT DETECTION OF AN IMAGE INSPECTION METHOD
PROCÉDÉ DE CONTRÔLE DE LA FIABILITÉ DE LA RECONNAISSANCE D'ERREUR D'UN PROCÉDÉ D'INSPECTION D'IMAGE

(30) Priorität: 31.03.2014 DE 102014004556
(43) Veröffentlichungstag der Anmeldung: 07.10.2015
(73) Patentinhaber: Heidelberger Druckmaschinen AG, 69115 Heidelberg (DE)
(72) Erfinder: Schumann, Frank, 69118 Heidelberg (DE); Soltwedel, Frank, 74889 Sinsheim/Hoffenheim (DE); Blatt, Daniel, 52159 Roetgen - Rott (DE)

(56) Entgegenhaltungen:
- EP-A2- 2 700 505
- DE-A1- 10 065 321
- US-A1- 2011 110 578

## Beschreibung

Die vorliegende Erfindung betrifft ein Verfahren zur Prüfung der Zuverlässigkeit der Fehlererkennung in einem Bildinspektionsverfahrens.

Die Erfindung liegt in dem technischen Gebiet der Testautomatisierung.

Im bisherigen Stand der Technik wird das zu prüfende Bildinspektionsverfahren eingesetzt, um im Rahmen der Durchführung eines Druckauftrages die fertiggestellten Druckerzeugnisse auf mögliche Fehler zu überprüfen. Dabei werden die gedruckten Bilder mittels einer Digitalkamera eingescannt, an einen Server verschickt und dort mit einem aus Vorstufendaten erzeugten Referenzbild oder mit einem gedruckten Referenzbild verglichen. Je nach Parametrierung der Vergleichsalgorithmen werden dabei Abweichungen zwischen dem re-digitalisierten Druckbild und dem Referenzbild als Fehler erkannt und angezeigt. Eine automatisierte Überprüfung der Bildinspektion findet nicht statt. Um dennoch mögliche Fehler in der Bildinspektion zu erkennen, welche dazu führen könnten, dass fehlerhafte Drucke nicht erkannt werden, erzeugt man Druckplatten, die mit verschiedenen Fehlerobjekten gefüllt sind - auch Fehlerplatten genannt. D. h. diese Druckplatten beinhalten Fehlerelemente, wie z. B. Punktfolgen, Texte mit Kommas und Punkten oder Punktrampen die bei Druck dieser Platte Druckfehler provozieren. Diese Druckfehler werden im Rahmen des Bildinspektionsverfahrens untersucht. Damit lässt sich testen, ob das Bildinspektionsverfahren noch korrekt funktioniert, d. h. noch richtig parametriert ist. Dieser Vorgang ist jedoch sehr aufwändig, da für einen solchen Test des Bildinspektionsverfahrens extra eine eigene Druckplatte angefertigt werden und zudem der eigentliche Druckauftrag während der Durchführung des Tests unterbrochen werden muss. Eine Automatisierung dieses Testverfahrens würde sowohl den Druckprozess selbst massiv beschleunigen, als auch die Kosten für die Durchführung reduzieren.

Ein Beispiel eines solchen Bildinspektionssystems ist aus der europäischen Patentanmeldung EP 2700505 A2 bekannt. Dort wird eine Rotationsdruckmaschine durch ein Inspektionssystem überprüft, bei welchem aus mehreren aufgenommen Bildern ein Referenzbild erstellt wird, welches dann mit einem live aufgenommenem Bild durch Differenzbildung verglichen und bewertet wird. Eine Bewertung des Inspektionssystems selber findet jedoch nicht statt.

Automatisierte Testsysteme werden in vielen Bereichen, insbesondere in der Softwareentwicklung, angewandt. Ein Beispiel ist die Steuergeräteentwicklung in der Automotive-Branche. Dabei werden die Steuergeräte, deren Aufgabe es ist Sensordaten zu erfassen, zu bewerten und davon abhängig Aktoren anzusteuern, verschiedensten Testszenarien unterzogen. Diese umfassen zum Einen Hardwareschäden, wie z. B. Leitungsunterbrechungen oder Kurzschlüsse in den Versorgungsleitungen oder bestimmten Anschlussleitungen. Zum Anderen werden Datenfehler getestet. Zum Beispiel durch beschädigte oder ausgefallene Sensoren die Werte außerhalb des Messbereichs liefern. Oder durch Aktoren welche nicht mehr ansprechbar sind. Auch wenn Sensorwerte einander widersprechen muss dies vom Steuergerät erkannt werden. All diese Fehlerkategorien lassen sich in einem automatisierten Testsystem beliebig miteinander kombinieren. Das Steuergerät muss diese Fehler erkennen und entsprechend seiner Programmierung korrekt darauf antworten. Durch den Einsatz automatisierter Testsysteme lassen sich mögliche Fehler in der Programmierung und/oder der Konfiguration frühzeitig erkennen und beheben. Damit werden sowohl Zeit als auch Kosten gespart, die andernfalls bei der nachträglichen Fehlersuche eines bereits im Feld befindlichen Gerätes massiv aufgewandt werden müssten.

Beispiele für solche automatisierten Testsysteme in der Bildverarbeitung sind zudem die US-Patentanmeldung US 2011/0110578 A1. Hier wird ein Verfahren zur Bewertung von Bildverarbeitungs-Algorithmen vorgestellt, welches einzelne Varianten eines Musterbildes mit jeweils einem veränderten Bildparameter erzeugt und dann verwendet um dann bestimmte Bildverarbeitungs-Algorithmen darauf zu testen, ob es diese veränderten Bildparameter erkennt.

In der deutschen Patentanmeldung DE 10065321 A1 wiederum wird ein Verfahren zum Überprüfen eines Inspektionsverfahrens von Gefäßen vorgestellt, welches auf dem Prinzip beruht, dem Inspektionsverfahren fehlerhafte Testbilder zu liefern und dann zu überprüfen, ob das Inspektionsverfahren die fehlerhaften Testbilder erkennt.

Beide automatisierten Testsysteme offenbaren jedoch nicht die verfahrensgemäße Überprüfung von Bildinspektionssystemen in Druckmaschinen mit ihren sehr spezifischen Anforderungen.

Die Aufgabe der vorliegenden Erfindung ist daher, einen automatisierten Test für ein Bildinspektionsverfahren in Druckmaschinen zu offenbaren, in welchem mögliche Fehler in der Funktion der Bildinspektion, z.B. als Folge falscher Parametrierung oder eines Defektes oder falschen Einbaus des Messgeräts, frühzeitig erkannt werden.

Die erfindungsgemäße Lösung dieser Aufgabe stellt dabei ein Verfahren mit den Merkmalen von Hauptanspruch 1 dar.

Ein Verfahren zur Prüfung der Zuverlässigkeit der Fehlererkennung eines Bildinspektionsverfahrens für eine Druckmaschine mittels eines Rechners, wobei das Bildinspektionsverfahren und die Zuverlässigkeitsprüfung Bestandteil eines Druckprozesses für die Druckmaschine sind und wobei die Zuverlässigkeitsprüfung ein optionaler Bestandteil des zu prüfenden Bildinspektionsverfahrens ist, der manuell aktiviert und deaktiviert werden kann, das die folgenden Schritte umfasst:
1. Erzeugung eines fehlerhaften Testbildes durch Überlagerung eines fehlerfreien Referenzbildes mit spezifischen Fehlerelementen, wobei die Fehlerelemente aus Punkten oder Flächen verschiedenster Größen und Anordnungen bestehen.
2. Die Durchführung des Bildinspektionsverfahrens mit dem fehlerhaften Testbild.
3. Ein Vergleich der vom Bildinspektionsverfahren gefundenen Fehler mit den Fehlern, die man dem Testbild zugefügt hat.
4. Die Bewertung der Zuverlässigkeit des Bildinspektionsverfahrens anhand des Unterschieds zwischen den gefundenen und den erwarteten Fehlern.

Dabei wird das fehlerhafte Testbild im Anschluss an die Erstellung des Referenzbildes erzeugt, welches aus den bekannten Vorstufendaten des Druckauftrages erzeugt wird. Der Fakt wie viele der Fehler, welche über die Fehlerelemente in das Testbild eingestreut wurden, von der Bildinspektion gefunden wurden, gibt dann Aufschluss ob die eingestellten Filterparameter des Bildinspektionsverfahrens noch korrekt sind. Der Vorteil ist, dass der Drucker einen sofortigen Rückschluss auf die Qualität der Bildinspektion erhält. Er kann somit im Fehlerfall sofort eingreifen, das Inspektionsverfahren neu einstellen und somit mögliche Makulatur reduzieren. Da zudem keine Fehlerplatte, d.h. eine Druckplatte mit vorgegebenen Fehlern zum Test des Inspektionssystems auf diese vorgegebenen Fehler, mehr erzeugt werden muss, deren Erstellung und Einsatz die Zeit zur Durchführung des gesamten Druckprozesses erhöht, werden sowohl Zeit als auch Aufwand reduziert. Damit wird es zudem ermöglicht das Bildinspektionsverfahren wesentlich häufiger zu prüfen und daher Abweichungen früher zu erkennen als es beim bisherigen Stand der Technik möglich war. Ein weiterer Punkt ist, dass die Zuverlässigkeitsprüfung ein optionaler Bestandteil des zu prüfenden Bildinspektionsverfahrens ist, die manuell vom Benutzer aktiviert und deaktiviert werden kann. D. h. der Drucker kann das Prüfverfahren beliebig hinzuschalten, je nach Komplexität des Druckauftrages. Ein Druckbild mit hoher Komplexität stellt höhere Anforderungen an das Bildinspektionsverfahren und erfordert damit auch eine häufigere Überprüfung desselben. Das Bildinspektionsverfahren ist zudem zusammen mit der Zuverlässigkeitsprüfung Bestandteil eines Druckprozesses für eine Druckmaschine. D.h. das Bildinspektionsverfahren wird zur Überprüfung der Qualität von Druckerzeugnissen benutzt und das anzumeldende Prüfverfahren ist für diesen Zweck optimiert. Dabei werden die bedruckten Bögen mittels einer in die Druckmaschine integrierten Digitalkamera erfasst und dann an einen per Netzwerk verbundenen Rechner (Server) übertragen und dort mit einem Referenzbild abgeglichen.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass sich das fehlerfreie Referenzbild aus den Vorstufendaten 1 des Druckauftrages ergibt. Das Referenzbild ist somit das Bild, was sich aus den Eingaben der Kundendaten bzgl. Bildinhalt, Bildanordnung und Bildformat ergibt. Es wird sowohl dem Kunden zur Bestätigung des Druckauftrages vorgelegt, als auch im Druckprozess zur Qualitätsüberprüfung benutzt. Alternativ ist es auch möglich, dass das Referenzbild das während eines Druckauftrags gedruckte und eingescannte Druckbild ist. Hier wird dann ein eingescanntes bevorzugt fehlerfreies Druckbild mit den spezifischen Fehlerelementen überlagert und so das fehlerhafte Testbild erzeugt.

Ein Bestandteil des erfindungsgemäßen Verfahrens ist, dass die Fehlerelemente aus Punkten oder Flächen verschiedenster Größen und Anordnungen bestehen. Diese Punktwolken, Punktrampen oder Flächen verschiedenster geometrischer Formen werden mit dem Referenzbild überlagert und ergeben das zu testende Fehlerbild.

Eine bevorzugte Weiterbildung des erfindungsgemäßen Verfahrens ist, dass durch das Prüfverfahren das Bildinspektionsverfahren auf die Erkennung verschiedenster Fehler, wie unterschiedliche Fehlergrößen, Kontraste in der Überlagerung oder das Fehlen von Farbe, getestet wird. Die Fehlertypen müssen von der Bildinspektion erkannt werden. Die Art und Häufigkeit ihres Auftretens lassen sich durch die Auswahl entsprechender Fehlerelemente für die Überlagerung mit dem Referenzbild steuern.

Eine bevorzugte Weiterbildung des erfindungsgemäßen Verfahrens ist, dass falls die Zuverlässigkeit des Bildinspektionsverfahrens nicht den vorher eingestellten Kriterien entspricht, eine manuelle und/oder automatische Neuparametrisierung des Bildinspektionsverfahrens durchgeführt wird. Damit wird sichergestellt, dass bei zu großen Abweichungen das Bildinspektionsverfahren neu konfiguriert und kalibriert wird. Andernfalls wäre nicht sichergestellt, dass alle auftretenden Fehler beim realen Druck gefunden werden.

Eine bevorzugte Weiterbildung des erfindungsgemäßen Verfahrens ist, dass das Verfahren auf dem Rechner automatisch zumindest in bestimmten zeitlichen Abständen im Hintergrund abläuft. Dadurch wird sichergestellt, dass der Bediener der Druckmaschine nicht vergisst, die Prüfung auf Zuverlässigkeit der Fehlererkennung regelmäßig durchzuführen. Dabei kann vorgesehen sein, dass immer während eines Druckauftrags eine Prüfung durchgeführt wird, und zwar immer dann wenn die Prüfung den Druckbetrieb nicht stört. Wenn bei der Prüfung festgestellt wird, dass ein Fehler vorliegt, wird der Bediener optisch oder akustisch informiert. Der Bediener muss sich als keine Gedanken über die Funktionsfähigkeit seines Bildinspektionssystems machen, denn er wird im Fehlerfall automatisch informiert.

Das Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1:: ein Beispiel für ein Fehlerelement,
- Figur 2:: die Entstehung eines simulierten Fehlerbildes,
- Figur 3:: den Ablauf des Prüfverfahrens.

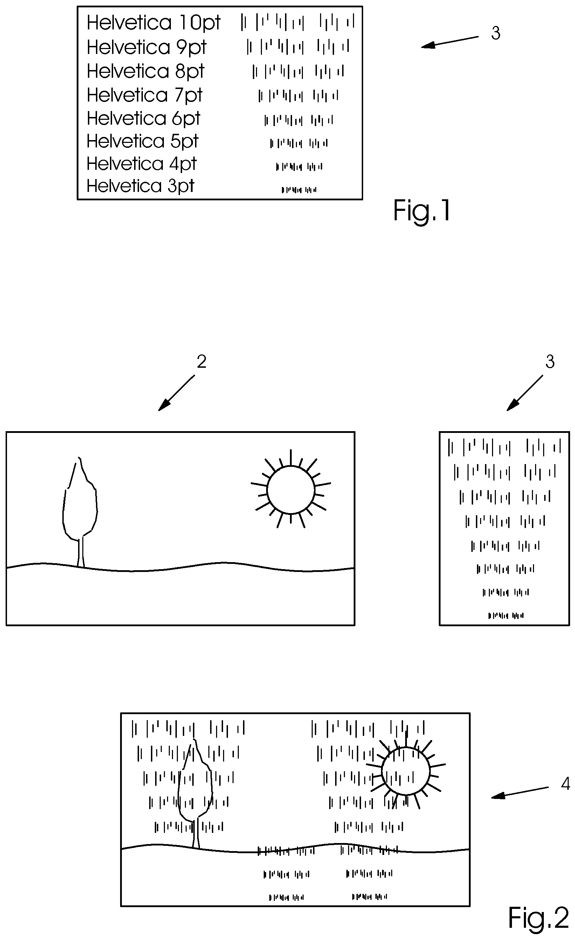

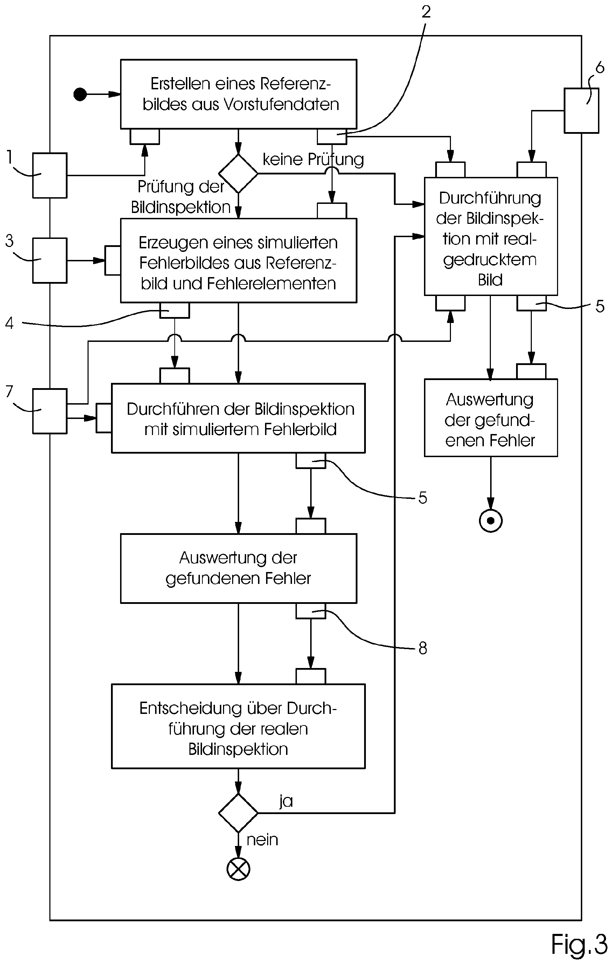

Das bevorzugte Ausführungsbeispiel schaut folgendermaßen aus. Es existiert eine grafische Anwendungssoftware welche die Bildinspektion steuert und überwacht. Dieser wird ein neuer Menüpunkt hinzugefügt, über welchen sich vom Benutzer das Prüfverfahren aktivieren und deaktivieren lässt. Ein beispielhafter Ablauf ist in Figur 3 dargestellt. Bei erstmaliger Aktivierung für den gegenwärtigen Druckprozess wird aus dem Referenzbild 2 und vorher ausgewählten, in der Software hinterlegten, Fehlerelementen 3 durch Überlagerung ein fehlerbehaftetes Testbild 4 geschaffen. Das Referenzbild 2 wird aus den Vorstufendaten 1 erzeugt, da es bereits für die laufende Bildinspektion benötigt wird. Das Fehlertestbild 4 kann auch direkt nach der Erstellung des Referenzbildes 2 für die Bildinspektion erstellt werden, so dass es bei Aktivieren des Prüfverfahrens sofort zur Verfügung steht. Die Fehlerelemente 3, beispielhaft dargestellt in Figur 1, sind in der Software abgelegt und können vom Benutzer in Abhängigkeit von den gewünschten Fehlertypen ausgewählt werden. Sie bestehen aus Punkten und Flächen verschiedenster Größen, Anordnungen und Kontraste. Weitere Möglichkeiten sind Farbelemente in unterschiedlichsten Flächendeckungswerten, Texte in unterschiedlichen Schriftzeichen (z.B. chinesisch/japanisch oder arabische Zeichen) und Ausrichtungen oder Nachbildungen von Kratzern, Löchern etc. Durch Überlagerung mit dem ursprünglichen Referenzbild 2 lassen sich durch gezielte Auswahl der Fehlerelemente 3 bestimmte Bildfehler erzeugen (symbolisch visualisiert in Figur 2). Zum Beispiel unterschiedliche Fehlergrößen, Kontraste in der Überlagerung oder das Fehlen von Farbe.

Im Rahmen des normalen Bildinspektionsverfahrens werden die gedruckten Bilder eingescannt, an einen Server verschickt und von einem, auf diesem Serverrechner laufenden, Programm mittels diverser Vergleichsalgorithmen mit dem Referenzbild 2 abgeglichen. Abweichungen werden als Fehler 5 erkannt, klassifiziert und von dem das Bildinspektionsverfahren steuerndem Programm dem Benutzer über ein Display angezeigt. Dieses Display kann dabei sowohl der Wallscreen der Druckmaschine als auch der Monitor eines separaten Rechners sein, über welchen das Bildinspektionsverfahren mittels grafischer Anwendungssoftware überwacht wird. Bei aktiviertem Prüfverfahren für die Bildinspektion wird nun anstatt eines eingescannten Bildes 6 das erstellte Fehlertestbild 4 an den Server geschickt. Das Fehlertestbild 4 wird vom Programm ebenfalls mit dem Referenzbild 2 abgeglichen. Wichtig ist dabei, dass das Bildinspektionsverfahren beim Abgleich mit dem Fehlertestbild 4 mit denselben Einstellungen 7 betrieben wird, wie beim Abgleich der eingescannten Bilder 6. Die im Fehlertestbild 4 erkannten Fehler 5 werden mit den erwarteten Fehlern, welche anhand der vorher mit dem Referenzbild 2 überlagerten Fehlerelemente 3 bekannt sind, verglichen. Anhand der Tatsache, wie viele der eingeschleusten Fehler von den Algorithmen erkannt worden sind, lässt sich bewerten wie zuverlässig die Bildinspektion arbeitet. Sollte die Zuverlässigkeit bestimmte, vorher vom Nutzer festgelegte, Kriterien unterschreiten, wird dies von der grafischen Anwendungssoftware auf dem Display angezeigt. Der Benutzer kann dann den Druckprozess unterbrechen und das Inspektionsverfahren neu kalibrieren. Falls die Einstellung des Bildinspektionsverfahrens automatisch erfolgt, so kann die Software automatisch eine Re-Kalibrierung auslösen.

Ob bei aktiviertem Prüfverfahren das Fehlertestbild parallel zu den eigentlich zu testenden eingescannten Bildern 6 bearbeitet wird, sprich das Bildinspektionsverfahren für die gedruckten Bilder weiterläuft oder für die Durchführung des Prüfverfahrens die Bildinspektion und damit der Druckprozess gestoppt werden muss, hängt von der Leistungsfähigkeit des Server bzw. des Programms und dessen Usability ab. Beide Varianten sind denkbar.

### Bezugszeichenliste

- 1: Vorstufendaten
- 2: Referenzbild
- 3: Fehlerelemente
- 4: simuliertes Fehlertestbild
- 5: Inspektionsergebnis
- 6: digitalisiertes Druckbild
- 7: Inspektionsparameter
- 8: Prüfungsergebnis

## Patentansprüche

1. Verfahren zur Prüfung der Zuverlässigkeit der Fehlererkennung eines Bildinspektionsverfahrens für eine Druckmaschine mittels eines Rechners, wobei das Bildinspektionsverfahren und die Zuverlässigkeitsprüfung Bestandteil eines Druckprozesses für die Druckmaschine sind und wobei die Zuverlässigkeitsprüfung ein optionaler Bestandteil des zu prüfenden Bildinspektionsverfahrens ist, der manuell aktiviert und deaktiviert werden kann, die folgenden Schritte umfassend:
• Erzeugen eines fehlerhaften Testbildes (4) durch Überlagerung eines fehlerfreien Referenzbildes (2) mit spezifischen Fehlerelementen (3), wobei die Fehlerelemente (3) aus Punkten oder Flächen verschiedenster Größen und Anordnungen bestehen
• Durchführung des Bildinspektionsverfahrens mit dem fehlerhaften Testbild (4),
• Vergleich der vom Bildinspektionsverfahren gefundenen Fehler (5) mit der anhand der bekannten dem Testbild (4) hinzugefügten Fehler zu erwartenden Fehlermenge,
• Bewertung der Zuverlässigkeit (8) des Bildinspektionsverfahrens anhand des Unterschiedes zwischen gefundenen und erwarteten Fehlern.

2. Verfahren nach Anspruch 1,
**dadurch gekennzeichnet,**
**dass** sich das fehlerfreie Referenzbild (2) aus den Vorstufendaten (1) eines Druckauftrages ergibt.

3. Verfahren Anspruch 1,
**dadurch gekennzeichnet,**
**dass** sich das fehlerfreie Referenzbild (2) aus den digitalen Daten eines eingescannten Druckbildes ergibt, welches gemäß Druckauftrag in der Druckmaschine produziert wurde.

4. Verfahren nach einem der vorherigen Ansprüche,
**dadurch gekennzeichnet,**
**dass** durch das Prüfverfahren das Bildinspektionsverfahren auf die Erkennung verschiedenster Fehler wie unterschiedliche Fehlergrößen, Kontraste in der Überlagerung oder das Fehlen von Farbe getestet wird.

5. Verfahren nach einem der vorherigen Ansprüche,
**dadurch gekennzeichnet,**
**dass** falls Zuverlässigkeit (8) des Bildinspektionsverfahrens nicht den vorher eingestellten Kriterien entspricht, eine manuelle oder automatische Neuparametrisierung des Bildinspektionsverfahrens durchgeführt wird.

6. Verfahren nach einem der vorherigen Ansprüche,
**dadurch gekennzeichnet,**
**dass** das Verfahren auf dem Rechner automatisch zumindest in bestimmten zeitlichen Abständen im Hintergrund abläuft.

## Claims

1. Method for testing the reliability of the error detection of an image inspection process for a printing machine by means of a computer, wherein the image inspection process and the reliability test are part of a printing operation for the printing machine and wherein the reliability test is an optional part of the image inspection process to be tested and may be manually activated and deactivated, the method comprising the steps of
• generating a defective test image (4) by superposing specific defect elements (3) onto a defect-free reference image (2), said defect elements (3) consisting of dots or areas of various sizes and arrangements
• carrying out the image inspection process with the defective test image (4)
• comparing the defects (5) detected by the image inspection process and the set of defects to be expected on the basis of the known defects added to the test image (4)
• analysing the reliability (8) of the image inspection process on the basis of the difference between the detected defects and the expected defects.

2. Method according to claim 1,
**characterized in**
**that** the defect-free reference image (2) results from the preprint data (1) of a print job.

3. Method according to claim 1,
**characterized in**
**that** the defect-free reference image (2) results from the digital data of a scanned print that has been produced on the printing machine in accordance with the print job.

4. Method according to any one of the preceding claims,
**characterized in**
**that** by means of the testing method, the image inspection process is tested to detect various defects such as different defect sizes, contrasts in the superposition, or a lack of colour.

5. Method according to any one of the preceding claims,
**characterized in**
**that** if the reliability (8) of the image inspection process does not correspond to the previously set criteria, a manual or automated reparameterisation of the image inspection process is carried out.

6. Method according to any one of the preceding claims,
**characterized in**
**that** at least at specific intervals, the method automatically runs on the computer in the background.

## Revendications

1. Procédé de contrôle à l'aide d'un ordinateur de la fiabilité de la détection d'erreurs d'un procédé d'inspection d'image pour une machine à imprimer, pour lequel le procédé d'inspection d'image et le contrôle de fiabilité font partie intégrante d'un processus d'impression pour la machine à imprimer et pour lequel le contrôle de fiabilité est un élément optionnel du procédé d'inspection d'image à contrôler, pouvant être activé et désactivé manuellement, composé des étapes suivantes :
• Génération d'une image de test (4) erronée par superposition d'une image de référence (2) exempte d'erreur avec des éléments d'erreur spécifiques (3), pour laquelle les éléments d'erreur (3) se composent de points ou surfaces de différentes tailles et dispositions
• Exécution du procédé d'inspection d'image avec l'image de test (4) erronée,
• Comparaison des erreurs (5) détectées par le procédé d'inspection d'image avec la quantité d'erreurs attendue sur la base des erreurs connues ajoutées à l'image de test (4),
• Analyse de la fiabilité (8) du procédé d'inspection d'image sur la base de la différence entre les erreurs détectées et attendues.

2. Procédé selon la revendication 1,
**caractérisé par le fait**
**que** l'image de référence (2) exempte d'erreur est issue des données de prépresse (1) d'un travail d'impression.

3. Procédé selon la revendication 1,
**caractérisé par le fait**
**que** l'image de référence (2) exempte d'erreur est issue des données numériques d'une image d'impression scannée, produite conformément à un travail d'impression dans la machine d'impression.

4. Procédé selon l'une des revendications précédentes,
**caractérisé par le fait**
**que** le procédé de contrôle permet de tester si le procédé d'inspection d'image détecte des erreurs très diverses, telles que tailles d'erreurs différentes, contrastes dans la superposition ou l'absence de couleur.

5. Procédé selon l'une des revendications précédentes,
**caractérisé par le fait**
**qu'**un nouveau paramétrage manuel ou automatique du procédé d'inspection d'image est exécuté si la fiabilité (8) du procédé d'inspection d'image ne correspond pas aux critères préalablement réglés.

6. Procédé selon l'une des revendications précédentes,
**caractérisé par le fait**
**que** le procédé se déroule automatiquement, au moins dans les intervalles de temps définis, en arrière-plan sur l'ordinateur.
